# EUROPEAN PATENT SPECIFICATION

(11) **EP 2 812 211 B1**
(45) Date of publication and mention of the grant of the patent: **17.10.2018**
(21) Application number: 13703533.3
(22) Date of filing: 08.02.2013
(51) Int. Cl.: B60N 2/66, B60N 2/56, A47C 7/46, A47C 7/74

(54) **LUMBAR SUPPORT DEVICE FOR A VENTILATED SEAT**
LENDENSTÜTZVORRICHTUNG FÜR EINEN BELÜFTETEN SITZ
DISPOSITIF DE SUPPORT LOMBAIRE POUR UN SIÈGE VENTILÉ

(30) Priority: 10.02.2012 EP 12155013
(43) Date of publication of application: 17.12.2014
(73) Proprietor: Schukra Gerätebau GmbH, 2560 Berndorf (AT)
(72) Inventor: DEPPE, Rüdiger Heinrich, 85101 Lenting (DE); MARTIN, Wilfried, 90443 Nürnberg (DE); KARTCHEMNAIA, Tamara, 90461 Nürnberg (DE); JUNKER, Klaus, 86911 Diessen a. Ammersee (DE); MAIERHOFER, Gunter, 90587 Veitsbronn (DE); SAMAIN, Maxime, 90461 Nürnberg (DE)
(74) Representative: Banzer, Hans-Jörg
(86) International application number: PCT/EP2013/000389
(87) International publication number: WO 2013/117346

(56) References cited:
- EP-A1- 2 322 058
- WO-A1-2006/105989
- DE-C1- 19 851 209

## Description

### FIELD OF THE INVENTION

The invention relates to a lumbar support device. The invention relates in particular to an adjustable lumbar support device which may be used for adjustments in a ventilated seat.

### BACKGROUND

Lumbar support devices are frequently provided in seat backrests in order to provide adequate support in the lumbar vertebral or lordosis region of a person sitting on the seat by forming a suitable support surface. The lumbar support device frequently has a support basket or other lumbar support member that is attached to a frame arranged in the seat backrest. By means of an adjusting device the curvature or convexity of the support basket or other lumbar support member may be adjusted. Alternatively or additionally, the position of the support basket or other lumbar support member along the longitudinal, i.e. height, direction of the backrest may be adjusted. An adjustment of the lumbar support member may be effected by means of a manual actuator or by means of a power actuator, which may comprise an electric motor. Lumbar support devices may also be implemented as four-way lumbar supports that allow both a curvature and a position of the lumbar support member to be adjusted, in order to provide for enhanced comfort. Examples for adjusting devices that provide excellent support to the person sitting on the seat are, for example, known from WO 2005/077705 A1 or from DE 10 2005 027 922 B3.

EP 2 322 058 A1, which serves as basis for the preamble of claim 1, discloses a lumbar support device.

DE 198 51 209 C1 discloses a vehicle seat having a ventilator which is attached to the lumbar support.

In order to provide enhanced convenience to the user, ventilation componentry may be integrated into a seat. Such ventilation componentry may include a ventilator. This allows climate functions to be integrated into the seat.

The combination of seat ventilation and adjustable lumbar support functions represents a considerable challenge. In one approach, the ventilator or other heating/cooling componentry may be provided at a location which is offset from the lumbar support region of the seat. While such an arrangement may prevent the ventilator from interfering with the adjustable lumbar support device, it may provide inadequate ventilation functions in the lumbar support region. If the ventilator is provided in proximity to the lumbar support region, good ventilation may be attained also in the lumbar support region. However, the ventilator may limit the adjustments which can be made with the adjustable lumbar support device.
In one approach which combines seat ventilation and adjustable lumbar support functions, an opening may be provided in a lumbar support basket. The ventilator may be mounted to the seating cushion so as to be displaceable in a direction normal to the backrest surface, without interfering with or physically contacting the lumbar support basket. Such an approach may have shortcomings in terms of construction space requirements.

### SUMMARY

There is a continued need in the art for an improved lumbar support device which addresses some of the above shortcomings. In particular, there is a need in the art for an adjustable lumbar support device which can be easily combined with ventilation functions of the seat. There is also a need in the art for such a lumbar support device which allows seat ventilation and adjustable lumbar support functions to be combined in a small construction space.

According to the invention, a lumbar support device as defined in the independent claim 1 is provided. The dependent claims define preferred or advantageous features of the invention. A lumbar support device for a ventilated seat according to an embodiment comprises a lumbar support member, a pair of guide members, an adjusting member coupled to the pair of guide members, a ventilator configured to provide seat ventilation and a mount structure which mounts the ventilator to the lumbar support member. The adjusting member is displaceable along the pair of guide members and configured such that the lumbar support member is adjusted when the adjusting member is displaced.

In the lumbar support device, the ventilator is mounted to the adjustable lumbar support member. By integrating the ventilator with the adjustable lumbar support device, a compact construction is attained.

The lumbar support member may be a lumbar support basket.
The ventilator may be mounted such that it is located at the side of the lumbar support member which faces away from the seat cushion. The lumbar support member may have an opening for allowing a fluid channel to extend therethrough.
The lumbar support device may comprise at least one coupling member coupled to the adjusting member. The at least one coupling member may be supported by at least one support section of the adjusting member. The at least one support section may be configured to be moved past the ventilator in a direction parallel to the pair of guide members when the adjusting member is displaced along the pair of guide members. This allows the ventilator to be provided in a lower seat portion. With the at least one support section being configured to move past the ventilator, the ventilator does not interfere with the operation of lumbar support adjustment.

The at least one coupling member may be an arching member.
The at least one support section may support an end of the at least one coupling member.
The adjusting member may include a cross member extending between the pair of guide members. A cut-out may be formed in the cross member to allow the ventilator to pass therethrough when the adjusting member is displaced along the pair of guide members.

The cut-out may be dimensioned to define a clearance between the cross member and the ventilator, in a direction normal to a plane defined by the pair of guide members.

The adjusting member may include a pair of legs extending along the pair of guide members. The pair of legs may be spaced by a distance which is greater than a lateral dimension of the ventilator. The at least one support section may be formed on the pair of legs.

The lumbar support device may comprise a stop to limit movement of the ventilator when a load is applied onto the lumbar support member.

The lumbar support device may comprise a connection member to connect the ventilator to a fluid channel of the ventilated seat. The connection member may comprise a resilient bellows. The connection member may have one end coupled to the ventilator, and another end coupled to a fluid channel of a seat cushion. The resilient bellows may be formed from an air-tight material.

The mount structure may be formed from a plastic material. The mount structure may comprise a rubber mount or a plurality of rubber mounts.

The ventilator may be a sucking ventilator.

The lumbar support structure may comprise a further adjusting member which is displaceable along the pair of guide members, and a power drive mechanism to displace at least one of the adjusting member and the further adjusting member along the pair of guide members.

The power drive mechanism may comprise a motor and a spindle operatively coupled to the motor. The spindle may be arranged to extend parallel to the pair of guide members. This allows the lumbar support device for the ventilated seat to have a particularly compact configuration.

One of the adjusting member and the further adjusting member may be displaceably supported on the other one of the adjusting member and the further adjusting member.

The mount structure is attached to at least one guide member of the pair of guide members. The mount structure may be attached to both guide members of the pair of guide members.

The mount structure may comprise a support plate to which the ventilator is attached. The support section may be a support plate having an opening.

The mount structure may comprise a pivot section about which the support plate is pivotable. The pivot section may be formed from a flexible plastic material. The pivot section may be formed from a plastic material having a thickness which is less than a thickness of the support section.

The support plate and the pivot section may be integrally formed from a plastic material.
The mount structure may comprise an overmolded section overmolded onto at least one guide member of the pair of guide members. The overmolded section may be integrally formed with the support section to which the ventilator is attached.
The mount structure may comprise a cross member section which extends between and is attached to both guide members of the pair of guide members. The pivot section may be interposed between the transverse section and the support section.

The mount structure may support the ventilator in an area which, in the installed state of the lumbar support device, corresponds to an upper area of the lumbar support device. The mount structure may support the ventilator in an area which is offset in a direction parallel to the guide members from an area through which the adjusting member and, if present, the further adjusting member move. The mount structure may support the ventilator such that, in the installed state of the lumbar support device, the ventilator is located at a rear side of the lumbar support member.
A spindle may be attached to the mount structure. The spindle may be attached to the support section of the mount structure. The spindle may be hinged to the mount structure. The spindle may be engaged with a spindle nut to adjust the lumbar support.
The spindle may be resilient. The spindle may be configured such that it applies a restoring force onto the mount structure when the ventilator is displaced from a rest position. The spindle may be configured such that, in the installed state of the lumbar support device, the spindle biases the support section in a forward direction against a rearward movement of the support section.

Also, a ventilated seat is provided. The ventilated seat has a seat cushion and the lumbar support device according to claims 1 - 13.

The ventilator may be connected to at least one fluid channel formed in the seat cushion.

The device according to the present invention may be utilized for adjusting a lumbar support in a seat backrest of a ventilated seat. Particularly, it may be utilized for adjusting a lumbar support provided in a seat backrest of a vehicle seat and for providing ventilation to the vehicle seat, in particular an automotive vehicle seat.

### BRIEF DESCRIPTION OF THE DRAWINGS

Additional features and advantages of the invention will become more readily appreciated from the following detailed description with reference to the accompanying drawings in which like reference numerals refer to like elements, wherein:
Fig. 1 is a perspective view of a lumbar support device.
Fig. 2 is a partially broken-away side view of a lumbar support device.
Fig. 3 is a plan view of the lumbar support device of Fig. 2.
Fig. 4 is a cross-sectional view along line IV-IV in Fig. 3.
Figs. 5-8 illustrate operation of the lumbar support device of Fig. 2.
Fig. 9 illustrates mounting of a ventilator in the lumbar support device of Fig. 2.
Fig. 10 is a plan view of another lumbar support device.
Figs. 11 and 12 are partially broken-away side views of another lumbar support device.
Fig. 13 is a partially broken-away side view of another lumbar support device.
Fig. 14 is a plan view of another lumbar support device.
Fig. 15 is a plan view of another lumbar support device.
Fig. 16 is a plan view of another lumbar support device.
Fig. 17 is a plan view of another lumbar support device.
Fig. 18 is a plan view of another lumbar support device.
Fig. 19 is a plan view of a lumbar support device according to the present invention.
Fig. 20 is a partial rear view of the lumbar support device of Fig. 19.
Fig. 21 is a partial rear view of the lumbar support device of Fig. 19 with a lumbar support member removed.
Fig. 22 is a cross-sectional detail view of the lumbar support device of Fig. 19.
Fig. 23 is another cross-sectional detail view of the lumbar support device of Fig. 19.
Fig. 24 is a view of another lumbar support device.
Fig. 25 is a side view of a lumbar support device having a configuration as shown in Fig. 24.
Fig. 26 is an enlarged partial view showing a lumbar support member of the device of Fig. 25.
Fig. 27 is a side view of a lumbar support device having a configuration as shown in Fig. 24.
Fig. 28 is an enlarged partial view showing a lumbar support member of the device of Fig. 27.

### DETAILED DESCRIPTION

In the drawings, elements or features which have the same or similar construction and/or operation are designated with the same reference numerals.

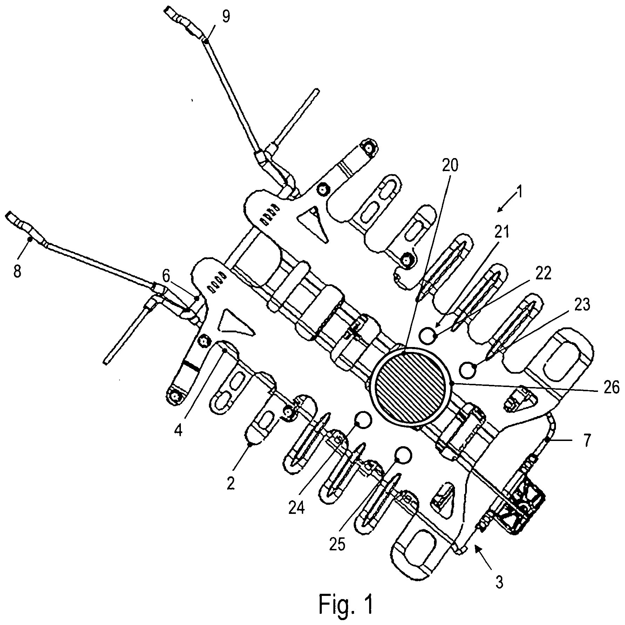

Fig. 1 is a perspective view of a lumbar support device 1. The lumbar support device 1 comprises a lumbar support member 2 and an adjusting device 3 for adjusting the lumbar support member 2. The lumbar support member 2 may be configured as a so-called support basket having a plurality of resilient fingers for providing support. Other suitable configurations of lumbar support members, such as support plates or similar, may also be used to implement the lumbar support member 2.
When the lumbar support device 1 is installed in a backrest of a seat, the adjusting device 3 is operative to alter the position of an apex of the lumbar support member 2. The adjusting device 3 may be configured to adjust a position and/or height of the apex. To this end, the adjusting device 3 may comprises a pair of adjusting members and at least one drive mechanism, as will be described in more detail in the following.

The pair of adjusting members may be displaced along a pair of guide members which extend substantially parallel and in a substantially longitudinal direction of the backrest.
The adjusting device 3 has a frame which comprises at least two guide members 4 and 5. Two cross members 6 and 7 extend in between the two guide members 4 and 5, so that the two guide members 4 and 5 are spaced relative to each other and extend essentially parallel to each other. The guide members 4 and 5 may be formed as guide wires. Extensions 8 and 9 of the frame defined by guide members 4 and 5 and the cross members 6 and 7, and extensions projecting from the cross member 6 in a width direction of the seat allow the frame defined by the guide members 4 and 5 and the cross members 6 and 7 to be mounted to the frame of a seat backrest. Several of the guide members 4, 5 and the cross members 6, 7 may be integrally formed. For illustration, the two guide members 4 and 5 and the lower cross member 7 may be formed from a wire which generally has a U-shape. Alternatively, the guide members 4, 5 and the cross members 6, 7 may be separate members that are attached to each other using suitable mounts.
The lumbar support device 1 has a ventilator 20 for providing seat ventilation. The ventilator 20 is mounted to the lumbar support member 2. The ventilator 20 may be located at a first side of the lumbar support member 2, the first side being located opposite to the face of the lumbar support member 2 which contacts a seat cushion or other upholstery. The ventilator 20 may be attached to the lumbar support member 2 via a mount structure 21. The mount structure 21 may include a plurality of rubber mounts 22-25, which are respectively attached to the ventilator 20 and the lumbar support structure 2. An opening 26 may be formed in the ventilator 20. The opening 26 may have a diameter which is smaller than a diameter of the ventilator 20. A connection member for providing fluid communication between the ventilator 20 and fluid channels of the seat cushion may extend through the opening 26. The ventilator 20 may be a sucking ventilator, which draws air into the ventilator 20. The ventilator 20 may suction air from fluid channels in the seat cushion towards the ventilator 20.

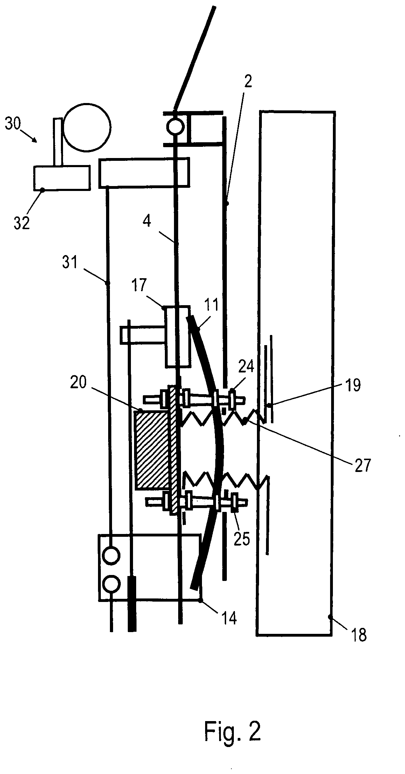

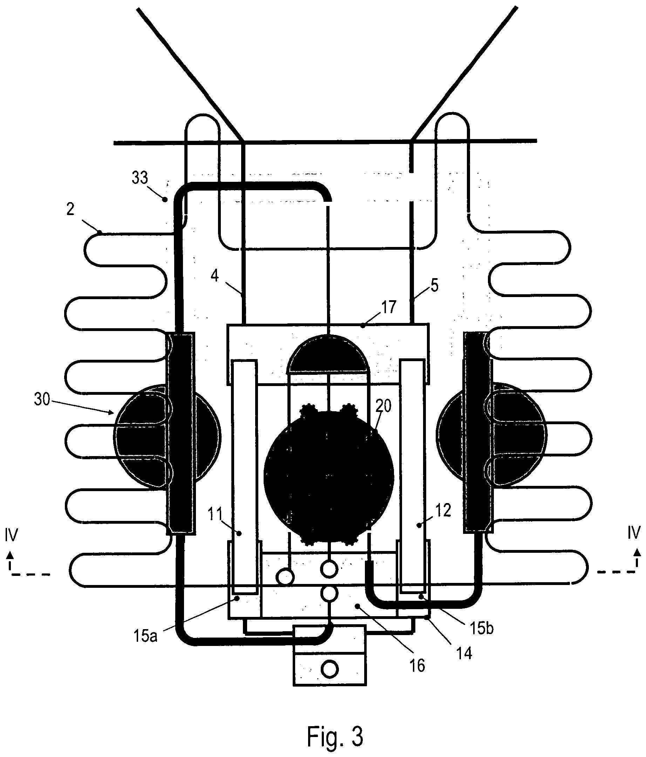

With reference to Figs. 2-28, lumbar support devices which provide adjustable lumbar support and seat ventilation will be described in more detail. Referring now to Fig. 2 and Fig. 3, the lumbar support member 2 may be arranged to provide support for a seat cushion 18 when installed in a seat. The ventilator 20 is connected to a fluid channel 19 via a connection member 27. The connection member 27 may be formed as a resilient bellows. The connection member 27 may be formed from an airtight material. The ventilator 20 is attached to the lumbar support member 2, such that it is located at a rear side, i.e. the side facing away from the seat cushion 18. Rubber mounts 24, 25 hold the ventilator 20 attached to the lumbar support member 2. The ventilator 20 is mounted such that it is spaced from the lumbar support member 2.

In order to provide adjustable lumbar support, the lumbar support device includes an adjusting member 14 and a further adjusting member 17. The adjusting member 14 is displaceable along the guide members 4, 5. The further adjusting member 17 is displaceable along the guide members 4, 5. At least one drive mechanism is provided to displace one or both of the adjusting member 14 and the further adjusting member 17 along the guide member 4, 5. A pair of coupling members 11, 12 (only one of which is shown in Fig. 2) is coupled to the adjusting member 14 and the further adjusting member 17. The coupling members 11, 12 push against the lumbar support member 2 at the rear side thereof. By jointly displacing the adjusting member 14 and the further adjusting member 17 along the guide members 4, 5, the location of an apex may be adjusted along the longitudinal direction of the backrest. By displacing the adjusting member 14 and the further adjusting member 17 relative to each other, a curvature of the coupling members 11, 12 may be adjusted, thereby altering the height of the apex measured normal to the backrest.

Any one of a variety of drive mechanisms may be used to displace the coupling members 11, 12. In one implementation, a Bowden cable arrangement may be used, as schematically illustrated at 30. The Bowden cable arrangement 30 may include at least one motor 32 coupled to Bowden cables 31. At least two Bowden cables may be used to effect a joint and relative displacement of the adjusting member 14 and the further adjusting member 17.

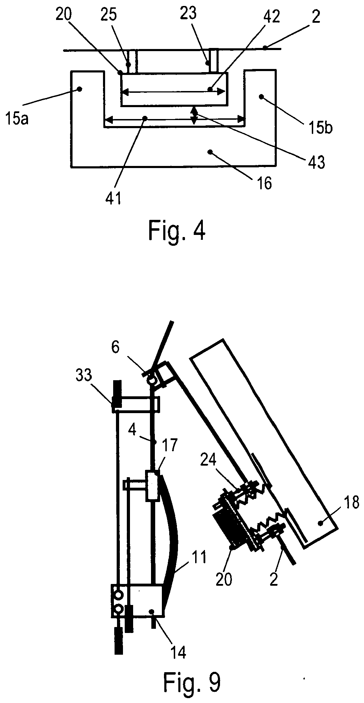

As will be described in more detail with reference to Figs. 4-8, the adjusting member 14 has a configuration which allows the adjusting member 14 to be moved past the ventilator 20, when the adjusting member 14 is displaced in an upward direction in Fig. 2. To this end, the adjusting member 14 may have a cut-out through which the ventilator 20 may pass when the adjusting member 14 is displaced along the guide members 4, 5. In other words, the adjusting member 14 may have lateral portions between which the ventilator 20 is received while the adjusting member 14 is displaced along the guide members 4, 5 and past the ventilator 20.

Fig. 3 is a plan view of the lumbar support device of Fig. 2. As illustrated, a plurality of Bowden cables may be attached to the adjusting member 14 and the further adjusting member 17. By selectively drawing in or playing out one of the Bowden cable wires, a joint displacement of the adjusting member 14 and the further adjusting member 17 is brought about. By selectively drawing in or playing out another one of the Bowden cable wires, a relative displacement between the adjusting member 14 and the further adjusting member 17 is brought about. The Bowden cable arrangement may be guided along a portion of a seat frame 33. Pulleys, motors, and gears of the drive mechanism may also be supported on the seat frame 33. Where the Bowden cable wires extend between the adjusting member 14 and the further adjusting member 17, they are positioned to extend offset from the ventilator, preferably in a plane which is located further away from the lumbar support member 2 than the ventilator 20.

The adjusting member 14 has lateral support sections 15a, 15b and a cross member 16. The cross member 16 extends between the guide members 4, 5. The lateral support section 15a supports a lower end of the coupling member 11. The lateral support section 15b supports a lower end of the other coupling member 12. The coupling members 11 and 12 may be resilient and configured such that their curvature is altered as the adjusting member 14 and further adjusting member 17 are displaced relative to each other.

The cross member 16 of the adjusting member 14 is recessed compared to the lateral support sections 15a, 15b. The adjusting member 14 defines a cut-out which allows the ventilator 20 to pass therethrough as the adjusting member 14 is displaced along the guide member 4, 5.

Fig. 4 shows a cross-sectional view of the lumbar support device of Fig. 3 along line IV-IV in Fig. 3. The cross member 16 of the adjusting member 14 is recessed compared to the lateral support sections 15a, 15b. This allows the ventilator 20 to enter a recess formed between the lateral support sections 15a, 15b. A distance 41 between the two lateral support sections 15a, 15b, measured in a direction perpendicular to the two guide members 4, 5, is greater than a maximum lateral width 42 of the ventilator 20, measured in the direction perpendicular to the two guide members 4, 5.

The cross member 16 of the adjusting member 14 is recessed by a distance that is set such that a clearance exists between the ventilator 20 and the cross member 16 when the adjusting member 14 is moved past the ventilator 20. The clearance has a height 43. The height 43 may be set so as to allow the lumbar support member 2 and the ventilator 20 attached thereto to be displaced in a direction normal to the backrest, when a seat occupant exerts a load onto the backrest.

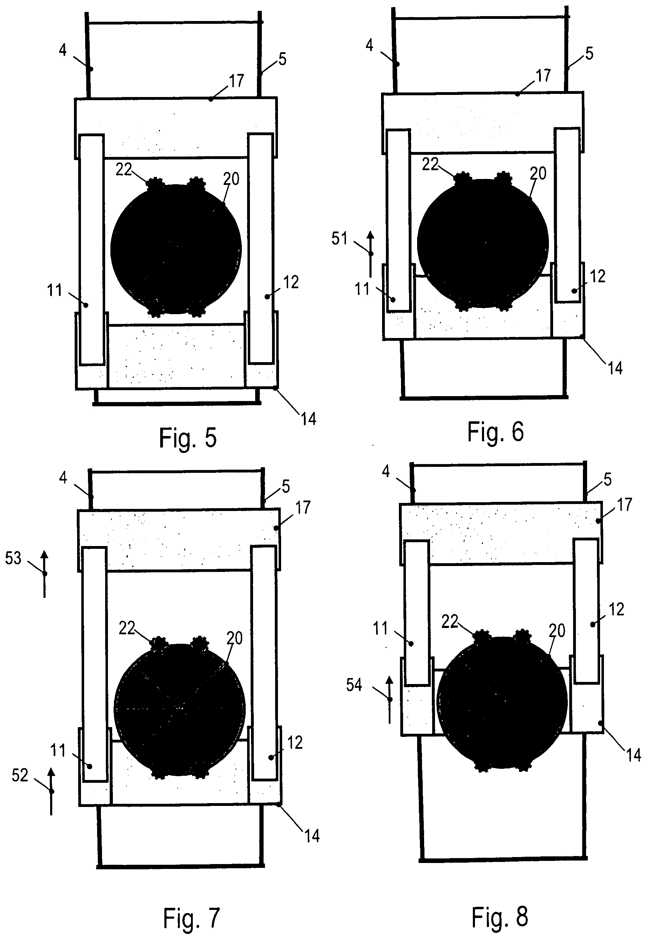

Figs. 5-8 illustrate operation of the lumbar support device of Figs. 2-4. Fig. 5 shows a state in which the adjusting member 14 and the further adjusting member are spaced by a large distance. Accordingly, the curvature of the coupling members 11, 12 is small.

Fig. 6 shows a state in which the adjusting member 14 is displaced toward the further adjusting member 17, causing the adjusting member 14 to move in a direction 51. The adjusting member 14 has a configuration which allows it to move past the ventilator 20 in this process. The ventilator 20 does not interfere with the movement of the adjusting member 14, even when a load is exerted onto the backrest. When the adjusting member 14 is displaced toward the further adjusting member 17, the curvature of the coupling members 11, 12 increases. This increases the height of the apex of the lumbar support, measured normal to the backrest surface.

Fig. 7 shows a state in which the adjusting member 14 and the further adjusting member 17 are jointly displaced, causing them to move in a direction 52 and 53, respectively. The adjusting member 14 has a configuration which allows it to move past the ventilator 20 in this process. The ventilator 20 does not interfere with the movement of the adjusting member 14, even when a load is exerted onto the backrest. When the adjusting member 14 and the further adjusting member 17 are jointly displaced, the coupling members 11, 12 are displaced while their curvature is not altered. The apex of the lumbar support is thereby moved along the longitudinal direction of the backrest.

Fig. 8 shows a state in which, subsequently, the adjusting member 14 is displaced toward the further adjusting member 17, causing the adjusting member 14 to move in a direction 54. The adjusting member 14 has a configuration which allows it to move past the ventilator 20 in this process. The ventilator 20 does not interfere with the movement of the adjusting member 14, even when a load is exerted onto the backrest. When the adjusting member 14 is displaced toward the further adjusting member 17, the curvature of the coupling members 11, 12 increases. This increases the height of the apex of the lumbar support, measured normal to the backrest surface.
It will be appreciated that the adjusting member 14 may be displaced along the guide member 4, 5, and the ventilator 20 mounted to the lumbar support member 2 does not interfere with this displacement. The construction of the lumbar support device allows the ventilator 20 to be arranged at a lower portion of the backrest. This allows the ventilator 20 to be positioned close to where most of the ventilation is actually required. Ventilation may thereby be improved.
Fig. 9 illustrates a process of mounting the ventilator 20 to the lumbar support member 2. The lumbar support member 2 may be rotated about the cross member 6 of the wire frame. The rubber mounts 24 may be snapped onto the lumbar support member 2. Thereby, the ventilator 20 may be mounted to the lumbar support member 2. The connection member 27 for providing fluid communication between the seat cushion 18 and the ventilator 20 may be connected to the ventilator 20 and the seat cushion 18. By rotating the lumbar support member 2 back around the cross member 6 of the wire frame, the ventilator 20 may be brought to its operative position. The ventilator 20 may be mounted to the seat also after assembly of the other components of the lumbar support device has been completed, by rotating the lumbar support member 2. In another mounting method, the ventilator 20 and the lumbar support member 2 may be mounted separately. In yet another mounting method, the ventilator 20 may be mounted to the lumbar support after assembly of the other components. In this case, rather than rotating, the lumbar support member 2, the adjusting member 14 and further adjusting member 17 may be brought into positions which define a clearance that allows the ventilator 20 to be mounted to the lumbar support member 2, e.g. from the rear side thereof.

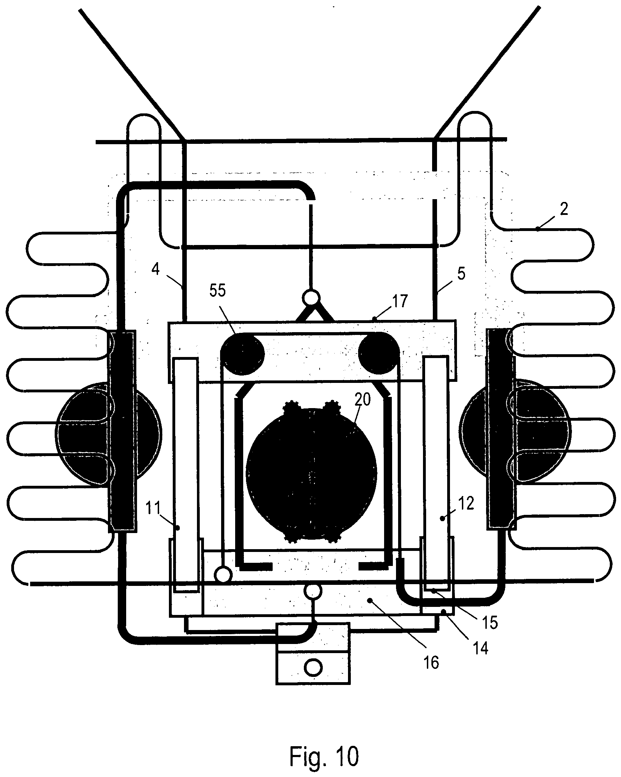

Fig. 10 is a plan view of another lumbar support device. In the lumbar support device of Fig. 10, the Bowden cable wires are guided such that they do not extend across an area in which the ventilator 20 is to be mounted. Thereby, a central region of the lumbar support device is kept clear of Bowden cable sheaths and wires. This facilitates mounting of the ventilator 20 and/or may decrease the overall height of the lumbar support device. Guides 55 for Bowden cable sheaths and/or Bowden cable wires may be provided to appropriately guide the Bowden cable sheaths and/or Bowden cable wires.

The other configuration and operation of the lumbar support device of Fig. 10 corresponds to that explained with reference to Figs. 1-9.

In the lumbar support devices, stops may be provided to limit movement of the lumbar support member 2 and the ventilator 20 attached thereto. The stops may be dimensioned such that they prevent the ventilator 20 from contacting the adjusting member 14 in excessive load conditions, even when the ventilator 20 is positioned in the cut-out of the adjusting member 14.

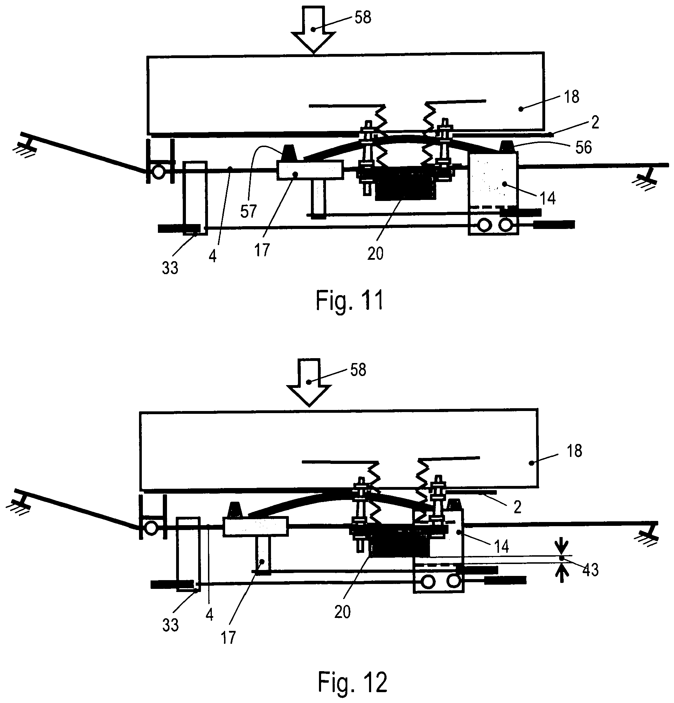

Fig. 11 shows a partially broken-away view of another lumbar support device. Fig. 12 shows a partially broken-away view of the lumbar support device when the adjusting member 14 has been displaced along the guide member 4. The lumbar support device has a ventilator 20 attached to a lumbar support member 2.
A stop 56 is formed on the adjusting member 14. The stop 56 projects from the adjusting member 14 towards the lumbar support member 2. A further stop 57 is formed on the further adjusting member 17. The further stop 57 projects from the further adjusting member 17 towards the lumbar support member 2. The stop 56 and the further stop 57 may be positioned and dimensioned such that the distance by which the lumbar support member 2 may be displaced under a load 58 is less than the height 43 of the clearance between cross member 16 of the adjusting member 14 and the ventilator 20.
The stop(s) may also be provided at the lumbar support member 2 rather than at the adjusting member 14 and the further adjusting member 17.

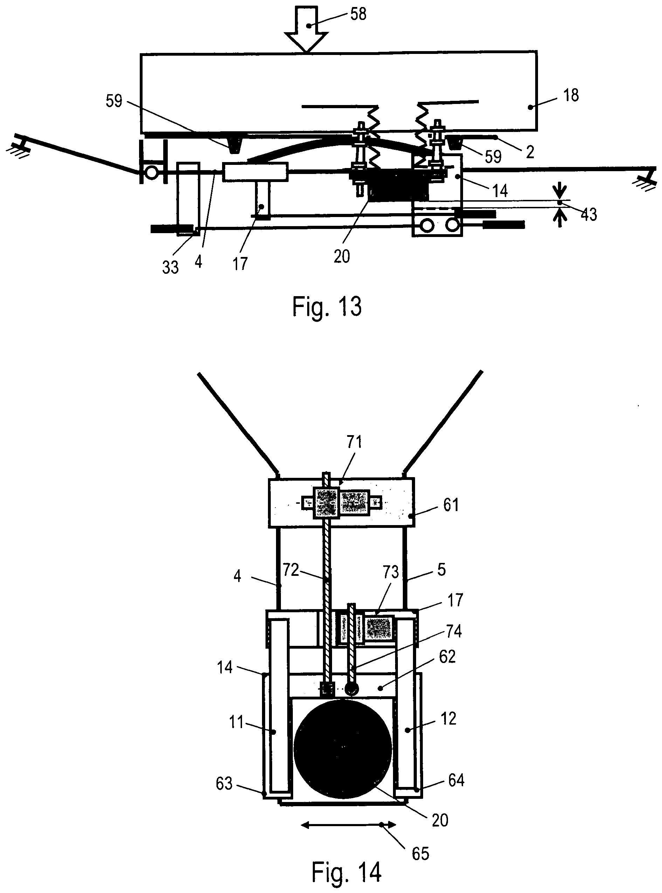

Fig. 13 shows a partially broken-away view of another lumbar support device. The lumbar support device has a ventilator 20 attached to a lumbar support member 2. Stops 59 are formed on the lumbar support member 2. The stops 59 project from the lumbar support member 2 towards the adjusting member 14 and the further adjusting member 17. The stops 59 may be positioned and dimensioned such that the distance by which the lumbar support member 2 may be displaced under a load 58 is less than the height 43 of the clearance between cross member 16 of the adjusting member 14 and the ventilator 20. The position of the stops 59 may be selected such that the stops 59 selectively stop movement of the lumbar support member 2 when the ventilator 20 is at least partially received in the cut-out between the lateral support sections 15a, 15b of the adjusting member 14.

Also, at least one stop may be provided on the adjusting member 14 and/or the further adjusting member 17, and at least one other stop may be provided on the lumbar support member 2.

Other configurations for adjusting mechanisms may be utilized. For illustration, spindle drive mechanism(s) may be used instead of Bowden cable drive mechanisms. Each spindle drive mechanism may have a spindle which has a structured exterior surface. The spindle may be flexible. At least one motor of a spindle drive mechanism may be arranged on an adjusting member which is displaceable along a pair of guide members 4, 5.
For further illustration, at least one of the adjusting members may have a U-shaped configuration with legs of the U-shaped adjusting member extending parallel to and along the guide members 4, 5. The legs of the U-shaped adjusting member may receive the ventilator 20 therebetween. Support sections of the U-shaped adjusting member, which support ends of arching members or other coupling members that act upon the lumbar support member 2, may be spaced by a distance which allows them to be moved past the ventilator when the adjusting member is displaced along the guide members 4, 5.
Lumbar support devices which utilize such a U-shaped adjusting member will be described with reference to Figs. 14-18. While not shown in Figs. 14-18, it is to be understood that the lumbar support devices explained with reference to Figs. 14-18 also have a lumbar support member 2, such as a lumbar support basket, and a mount structure which mounts the ventilator 20 to the lumbar support member 2. In the installed state of the lumbar support device, the ventilator 20 is in fluid communication with at least one air channel which may be formed in a seat cushion. The ventilator 20 may be a sucking ventilator.
Fig. 14 shows a lumbar support device. The lumbar support device has an adjusting member 14 and a further adjusting member 17. The adjusting member 14 and the further adjusting member 17 are displaceable along a pair of spaced guide member 4, 5.

The lumbar support device has two spindle drive mechanisms. A first spindle drive mechanism 71 includes a motor operatively coupled to a spindle 72. Actuation of the first spindle drive mechanism 71 causes the first adjusting member 14 and the second adjusting member 17 to be jointly displaced along the guide members 4, 5. The spindle 72 may have an end coupled to the adjusting member 14. A spindle nut may be provided on a support bar 61 which supports a motor of the first spindle drive mechanism 71. The spindle 72 of the first spindle drive mechanism may extend through or past the further adjusting member 17 but does not interact therewith.

A second spindle drive mechanism 73 includes a motor operatively coupled to a spindle 74. Actuation of the second spindle drive mechanism 73 causes the second adjusting member 14 and the second adjusting member 17 to be displaced relative to each other along the guide members 4, 5. The spindle 74 may have an end coupled to the adjusting member 14. A spindle nut may be provided on the further adjusting member 17. A motor of the second spindle drive mechanism 73 may also be supported in the further adjusting member 17.

The adjusting member 14 has a U-shape, when seen in plan view. The adjusting member 14 has a cross member 62 which extends between the pair of guide members 4, 5 in a direction normal thereto. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member.

In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

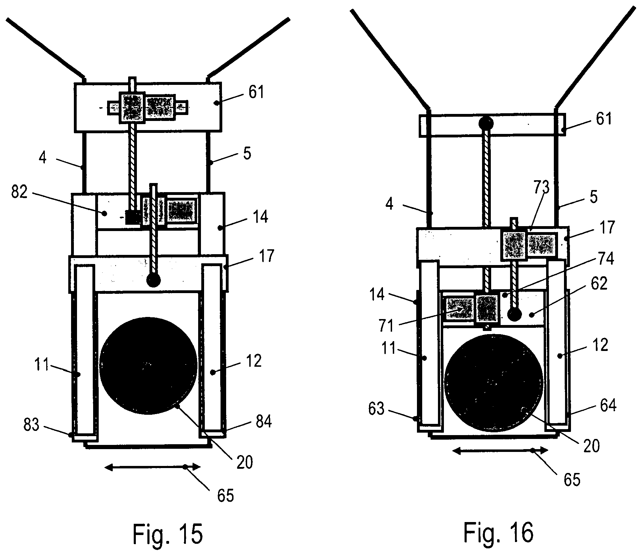

Fig. 15 shows a lumbar support device. The lumbar support device has an adjusting member 14 and a further adjusting member 17. The adjusting member 14 and the further adjusting member 17 are displaceable along a pair of spaced guide member 4, 5.

The lumbar support device has two spindle drive mechanisms, operative as explained with reference to Fig. 14.

The adjusting member 14 has a U-shape, when seen in plan view. The adjusting member 14 has a cross member 82 which extends between the pair of guide members 4, 5 in a direction normal to the guide members 4, 5. The adjusting member 14 has a first leg 83 and a second leg 84. The first leg 83 extends parallel to the guide member 4. The second leg 84 extends parallel to the guide member 5. An end of the first leg 83 supports an end of the coupling member 11. The coupling member 11 may be an arching member. An end of the second leg 84 supports an end of the coupling member 12. The coupling member 12 may also be an arching member.

In at least one operative position of the adjusting member 14, the first leg 83 and the second leg 84 are arranged so as to be laterally offset from the ventilator 20. The ventilator 20 is received in the gap formed between the first leg 83 and the second leg 84. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

The further adjusting member 17 is slideably supported on the adjusting member 14. The legs 83, 84 of the adjusting member 14 and the further adjusting member 17 may be provided with a linear guide mechanism which allows the further adjusting member 17 to be slid along the legs 83, 84 of the adjusting member 14. I.e., the further adjusting member 17 is displaced along the legs 83, 84 of the adjusting member when the second spindle drive mechanism is actuated. The resultant change in distance between the further adjusting member 17 and the lower ends of the legs 83, 84 which support the coupling members 11, 12 changes the curvature of the coupling members 11, 12.

Fig. 16 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 14. In the lumbar support device of Fig. 16, a motor of the first spindle drive mechanism 71 is supported on the cross member 62 of the adjusting member 14. An end of the spindle of the first spindle drive mechanism is attached to the support bar 61.

As explained with reference to Fig. 14, the adjusting member 14 has a U-shape, when seen in plan view. The adjusting member 14 has the cross member 62 which extends between the pair of guide members 4, 5 in a direction normal thereto. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member. In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

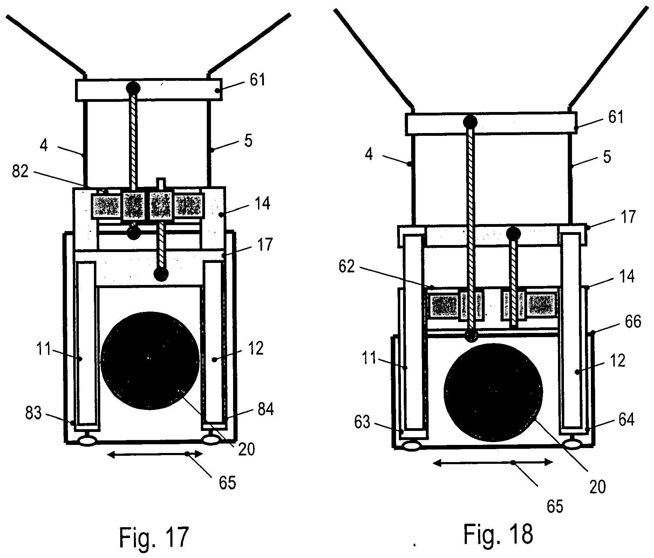

Fig. 17 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 14. In the lumbar support device of Fig. 17, a motor of the first spindle drive mechanism is supported on a cross member 82 of the adjusting member 14. A motor of the second spindle drive mechanism is also supported on the cross member 82 of the adjusting member 14.

The adjusting member 14 has a U-shape, when seen in plan view. The adjusting member 14 has a cross member 82 which extends between the pair of guide members 4, 5 in a direction normal to the guide members 4, 5. The adjusting member 14 has a first leg 83 and a second leg 84. The first leg 83 extends parallel to the guide member 4. The second leg 84 extends parallel to the guide member 5. An end of the first leg 83 supports an end of the coupling member 11. The coupling member 11 may be an arching member. An end of the second leg 84 supports an end of the coupling member 12. The coupling member 12 may also be an arching member.

In at least one operative position of the adjusting member 14, the first leg 83 and the second leg 84 are arranged so as to be laterally offset from the ventilator 20. The ventilator 20 is received in the gap formed between the first leg 83 and the second leg 84. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.

The further adjusting member 17 is slideably supported on the adjusting member 14. The legs 83, 84 of the adjusting member 14 and the further adjusting member 17 may be provided with a linear guide mechanism which allows the further adjusting member 17 to be slid along the legs 83, 84 of the adjusting member 14. I.e., the further adjusting member 17 is displaced along the legs 83, 84 of the adjusting member when the second spindle drive mechanism is actuated. The resultant change in distance between the further adjusting member 17 and the lower ends of the legs 83, 84 which support the coupling members 11, 12 changes the curvature of the coupling members 11, 12.

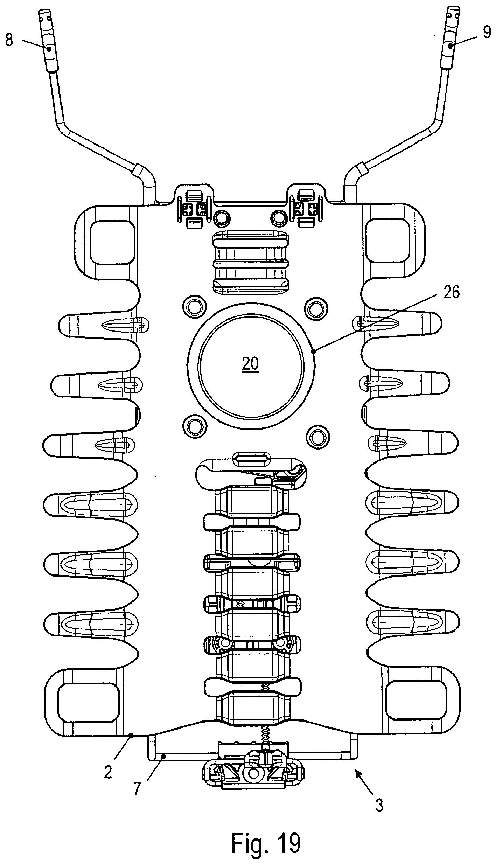

Fig. 18 shows a lumbar support device. The lumbar support device has an adjusting member 14 and a further adjusting member 17. The adjusting member 14 and the further adjusting member 17 are displaceable along a pair of spaced guide member 4, 5. The lumbar support device has two spindle drive mechanisms, operative as explained with reference to Fig. 14. In the lumbar support device of Fig. 18, a motor of the first spindle drive mechanism and a spindle nut operatively coupled to the motor is supported on a cross member 62 of the adjusting member 14. A motor of the second spindle drive mechanism is also supported on the cross member 62 of the adjusting member 14. Ends of a spindle of the first spindle drive mechanism are attached to the support bar 61 and a wire frame 66. A spindle nut of the first spindle drive mechanism is mounted on the first adjusting member 14. Actuation of a motor of the first spindle drive mechanism causes the adjusting member 14 and the further adjusting member 17 to be jointly displaced along the spindle of the first spindle drive mechanism. An end of a spindle of the second spindle drive mechanism is attached to the further adjusting member 17. A spindle nut of the second spindle drive mechanism is mounted on the first adjusting member 14. Actuation of a motor of the second spindle drive mechanism causes the adjusting member 14 and the further adjusting member 17 to be displaced relative to each other along the spindle of the second spindle drive mechanism.
The adjusting member 14 has a U-shape, when seen in plan view. The adjusting member 14 has the cross member 62 which extends between the pair of guide members 4, 5 in a direction normal to the guide members 4, 5. The adjusting member 14 has a first leg 63 and a second leg 64. The first leg 63 extends parallel to the guide member 4. The second leg 64 extends parallel to the guide member 5. An end of the first leg 63 supports an end of the coupling member 11. The coupling member 11 may be an arching member. An end of the second leg 64 supports an end of the coupling member 12. The coupling member 12 may also be an arching member.
In at least one operative position of the adjusting member 14, the first leg 63 and the second leg 64 are arranged so as to be laterally offset from the ventilator 20. The ventilator 20 is received in the gap formed between the first leg 63 and the second leg 64. A distance 65 by which the legs are spaced, measured normal to the direction of the guide members 4, 5, is greater than a maximum width of the ventilator 20. The ventilator does not interfere with the movement of the adjusting member 14 as the adjusting member 14 is displaced along the guide members 4, 5.
The lumbar support devices of Figs. 14-18 can be realized with a particularly compact construction space. The use of the U-shaped adjusting member allows the ventilator 20 to be positioned at a lower region of the backrest.
In the lumbar support devices of Figs. 14-18, spindle drive mechanisms are used. A spindle of each spindle drive mechanism extends parallel to the pair of guide members 4, 5 in a state in which no load is applied onto the lumbar support member 2. The motor of at least one lumbar support member is provided on the adjusting member or the further adjusting member, so as to be displaced along the pair of guide members 4, 5 upon actuation.
The mount structure for mounting the ventilator may have any one of a variety of configurations. For illustration, as explained with reference to Fig. 1 to 18, the mount structure may mount the ventilator in a lower area of the lumbar support device. Also, the mount structure may be configured to mount the ventilator in an upper area of the lumbar support device. A lumbar support device having such a configuration will be explained with reference to Fig. 19 to Fig. 23 below.
For further illustration, while the mount structure for mounting the ventilator may comprise one or several rubber mounts configured for engagement with holes in the lumbar support member 2, the mount structure may also be implemented using other structural features, as will be explained with reference to Fig. 19 to Fig. 23 below. The mount structure may be configured to mount the ventilator such that it is pivotable.

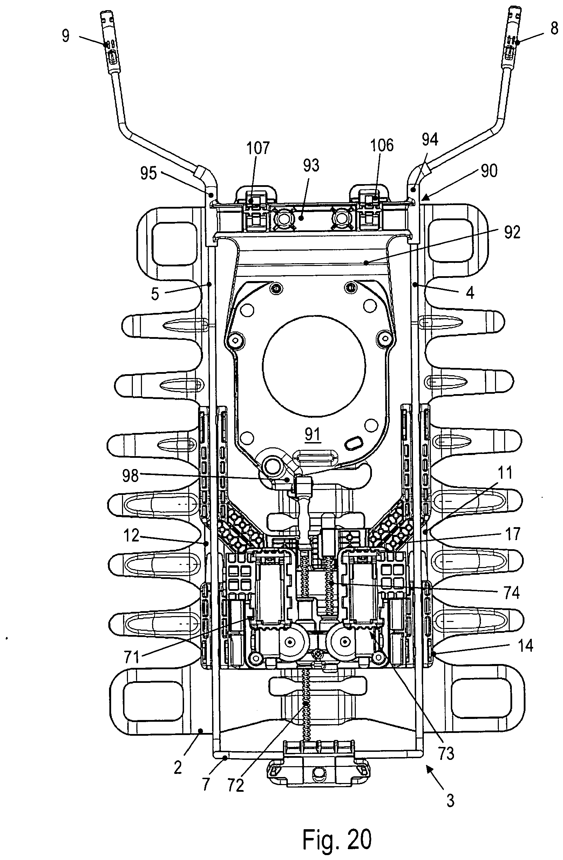

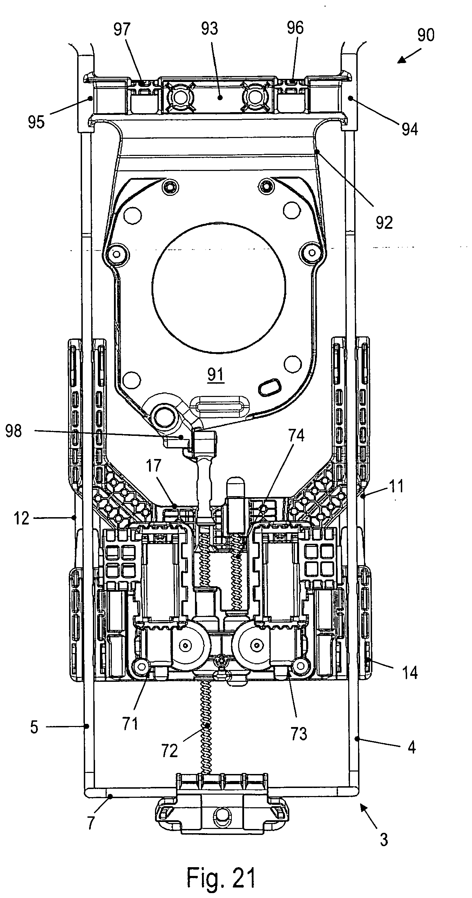

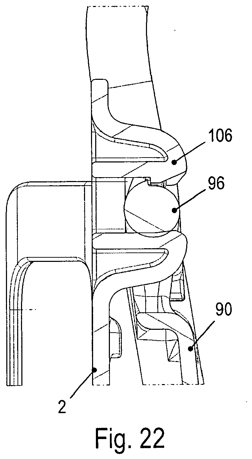

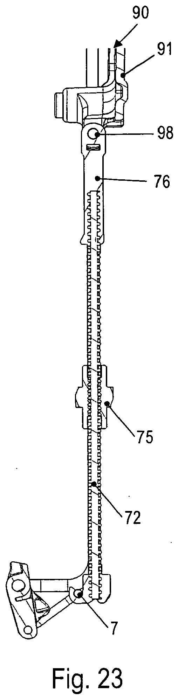

Fig. 19 is a plan front view of a lumbar support device according to the invention. Fig. 20 is a rear view of the lumbar support device with the ventilator removed. Fig. 21 is a rear view with the lumbar support member and ventilator removed. Fig. 22 and Fig. 23 are cross-sectional detail views of the lumbar support device. Elements or features which correspond to elements or features described with reference to Fig. 1 to Fig. 18 are designated with the same reference numerals.
The lumbar support device comprises a lumbar support member 2, a ventilator 20 a mount structure 90, an adjusting member 14 and, optionally, a further adjusting member 17. The mount structure 90 is configured for mounting the ventilator 20.
As best seen in Fig. 20 and Fig. 21, the mount structure 90 is attached to the guide members 4, 5. The mount structure 90 may be attached to the guide members 4, 5 by overmolding. The mount structure 90 engages the lumbar support member 2. As will be described in more detail below, the mount structure 90 for mounting the ventilator 20 and the lumbar support member 2 may have mating engagement structures.
The mount structure 90 has a support section 91. The support section 91 may be a support plate, with an opening 26 formed therein. The ventilator 20 is attached to the support section 91. The support section 91 may be formed from a plastic material. The support section 91 may be integrally formed with overmolded sections 94, 95 at which the mount structure 90 is molded onto the guide member 4, 5.
The support section 91 may be arranged such that the ventilator 20 is mounted in an upper area of the lumbar support device.

The mount structure 90 may be configured such that the support section 91 with the ventilator 20 attached thereto may pivot relative to the guide members 4, 5. The mount structure 90 may be configured such that the support section 91 may pivot about an axis which is transverse to the longitudinal axis of the guide members 4, 5. Loads acting onto the ventilator 20 may thereby be reduced.
To allow the ventilator 20 to pivot, the mount structure 90 may have a pivot section 92. The pivot section 92 may be formed from plastic material. The pivot section 92 may be integrally formed with the support section 91. The pivot section 92 may be formed to have smaller thickness than the support section 91 to allow the support section 91 to pivot about the pivot section 92. Other implementations of the pivot section 91 may be used. For illustration, a separate rod-shaped axle member may be provided to define a pivot axis, with the support section 91 being pivotably coupled thereto.
The mount structure 90 may have a cross member section 93 which extends between the guide members 4, 5. The cross member section 93 may provide structural stability at an upper end of the guide members 4, 5. The cross member section 93 may be formed from plastic material and may be integrally formed with the support section 91. The pivot section 92 may be interposed between the cross member section 93 and the support section 91.
The lumbar support member 2 may be attached to the mount structure 90 to thereby attach the ventilator 20 to the lumbar support member 2. The lumbar support member 2 is engaged with the mount structure 90. An engaging section may be formed on the mount structure 90 which includes one or several first engagement structure(s) 96, 97. The first engagement structure(s) 96, 97 may be rod-shaped portions of the mount structure 90. The first engagement structure(s) 96, 97 may extend through recesses of the mount structure 90. The first engagement structure(s) 96, 97 may be engaged with one or several mating second engagement structure(s) 106, 107 of the lumbar support member 2.
As explained with reference to Fig. 1 to 18, one or several adjusting member(s) 14, 17 may be provided so as to be displaceable along the guide members 4, 5. One or several spindle drive mechanism(s) may be provided to displace the adjusting members) 14, 17 along the guide members 4, 5. For illustration, the lumbar support device may have an adjusting member 14 and a further adjusting member 17 which are displaceable along the guide members 4, 5 to implement a four-way lumbar support. A first spindle drive mechanism 71 having a first spindle 72 may be provided for height adjustment. A second spindle drive mechanism 73 having a second spindle 74 may be provided for in-out adjustment, i.e., for adjusting a curvature of the lumbar support member 2.
A spindle 72, e.g. the spindle which is operated for height adjustment, is attached to the mount structure 90. The spindle 72 may be attached to the support section 91 of the mount structure. The spindle 72 may be operative to bias the support section 91 and the ventilator 20 attached thereto towards a rest position. This provides a restoring force when the ventilator 20 is displaced rearward by a load acting onto the lumbar support member 2.
The spindle 72 may be flexible. The spindle 72 may be pivotably attached to the mount structure 90. The spindle 72 may be attached to the mount structure 90 such that it is pivotable relative thereto about an axis transverse to a longitudinal axis of the spindle 72. The mount structure 90 may have a pivot coupling portion 98 for pivotably attaching the spindle 72.
If the lumbar support device is configured as a four-way lumbar support, the second spindle 74 may be rigid or may be flexible. The second spindle 74 may be connected to a spindle nut mounted on the adjusting member 14. The adjusting member 14 and the further adjusting member 17 may be displaced relative to each other when the second spindle drive 73 is activated.
Any one of the various configurations described with reference to Fig. 1 to Fig. 18 may be used for adjusting the lumbar support in the lumbar support device of Fig. 19. For illustration, as best seen in Fig. 20 and Fig. 21, the lumbar support device may comprise the adjusting member 14 and the further adjusting member 17. The further adjusting member 17 may be slidably supported on the adjusting member 14. The adjusting member 14 may be slidably supported on the guide members 4, 5. Alternatively, both the adjusting member 14 and the further adjusting member 17 may be supported directly on the guide members 4, 5.
For further illustration, as best seen in Fig. 20 and Fig. 21, at least one of the adjusting member 14 and the further adjusting member 17 may have a U-shape in plan view. The legs of the U-shape may be spaced apart such that the ventilator 20 does not interfere with the legs of the U-shape, even when the legs are displaced to enter a space at the lateral sides of the ventilator 20. For illustration, the further adjusting member 17 may have a cross member and two legs extending along the guide members 4, 5 such that the ventilator may be located in between the legs. Alternatively, the adjusting member 14 and/or the further adjusting member 17 are not U-shaped.
For further illustration, while a motor of the first spindle drive mechanism 71 and a motor of the second spindle drive mechanism 73 may both be arranged on the adjusting member 14, various other implementations are possible, as explained with reference to Fig. 14 to Fig. 18, for example.
With reference to Fig. 22, an exemplary implementation of a coupling structure for engaging the mount structure 90 with the lumbar support member 2 will be described in more detail. The mount structure 90 may have a first engagement structure 96 and the lumbar support member 2 may have a mating second engagement structure 106. The first engagement structure 96 may be rod-shaped. The second engagement structure 106 on the lumbar support may define a recess in which the first engagement structure 96 may be received. The first and second engagement structures may be configured for locking engagement. The lumbar support member 2 may be snapped onto the mount structure 90, for example, to thereby form a unit which has an adjustable lumber support and a ventilator.
With reference to Fig. 23, an exemplary implementation of a coupling structure for attaching a spindle 72 of a spindle drive mechanism to the mount structure 90 will be described in more detail. The mount structure 90 has a pivot coupling portion 98. The spindle 72 is pivotably attached to the mount structure 90 at the pivot coupling portion 98. The pivot coupling portion 98 may define a pivot axis which is transverse to the longitudinal axis of the spindle 72. An end portion 76 of the spindle 72 may engage the pivot coupling portion 98. The end portion 76 may be overmolded onto the spindle 72. The spindle 72 may extend through and may engage a spindle nut 75. When the spindle nut 75 is rotated, the spindle 72 is displaced along its longitudinal axis. This allows a height adjustment to be implemented, for example.
The lumbar support device described with reference to Fig. 19 to Fig. 23 may have various additional or alternative features described with reference to Fig. 1 to Fig. 18. For illustration, projections may be provided on the lumbar support member 2 and/or the guide members 4, 5 to limit deflection.

The lumbar support member may have a plurality of projections provided at a rear face thereof. The plurality of projections may be arranged such that there is a series of projections which are offset from each other along a longitudinal direction of the lumbar support member. Heights of the projections may vary.
A lumbar support device in which the lumbar support member includes a plurality of projections may be used in combination with a ventilator, a mount structure, and adjusting components as described with reference to Fig. 1 to Fig. 23.

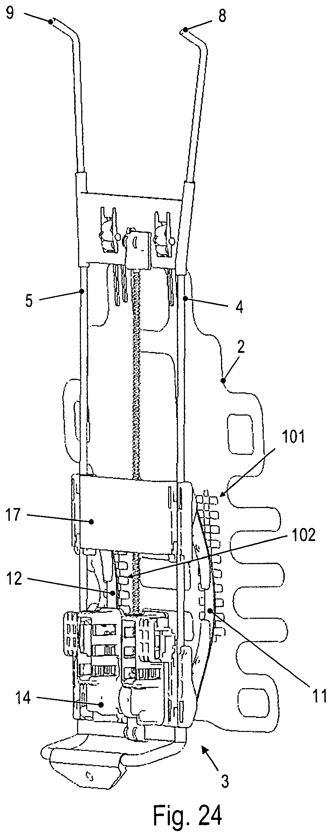

Fig. 24 is a perspective view of a lumbar support device which is not an embodiment unless a ventilator and mount structure for a ventilator, according to the present invention, are provided in the lumbar support device of Fig. 24.
The lumbar support device has a lumbar support member 2. An adjusting device 3 may be used for adjusting the lumbar support member 2. The adjusting device 3 may operate by displacement of one or several adjusting member(s) 14, 17 along guide members 4, 5, as explained with reference to Fig. 1 to Fig. 23. Coupling members 11, 12 may be configured to abut on the lumbar support member 3.
The lumbar support member 2 has a plurality of projections 101 at a rear face thereof. Each one of the projections 101 may extend in a lateral (left-right) direction. The projections 101 may be offset from each other along a longitudinal direction of the lumbar support member 2. Heights of the projections 101 may vary. The coupling member 11 may abut on the plurality of projections 101.
The lumbar support member 2 also has a further plurality of projections 102 configured for abutment of the further coupling member 12. Each one of the further projections 102 may extend in a lateral (left-right) direction. The further projections 102 may be offset from each other along a longitudinal direction of the lumbar support member 2. Heights of the further projections 102 may vary. The coupling member 12 may abut on the further plurality of further projections 102.

Various effects may be attained by providing the plurality of projections 101, 102 at a rear face of the lumbar support member. Bending of the guide members 4, 5 may be compensated at least in part. Thereby, variations in the degree of support provided by the lumbar support device 2 as the support region is adjusted upward or downward may be reduced.

Alternatively or additionally, the provision of the plurality of projections 101, 102 also supports configurations in which the guide members 4, 5 are arranged at an angle relative to a plane of the lumbar support member 2. This provides additional space for installing a ventilator.

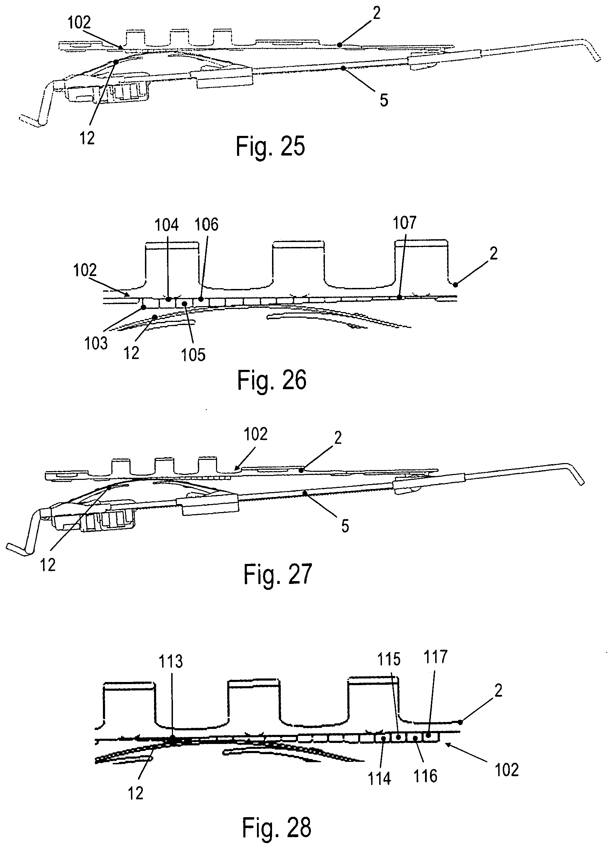

Fig. 25 to Fig. 28 are side views of lumbar support devices in which the lumbar support member has a plurality of projections. The structure and configuration of the plurality of projections 101 may respectively correspond to the structure and configuration explained for the projections 102 below.

Fig. 25 shows a lumbar support device in which the lumbar support member 2 has a plurality of projections 102. As best seen in the enlarged view of Fig. 26, a height of the projections 102 varies. A lowermost projection 103 may project from the rear face of the lumbar support member 2 by a height which is greater than a height by which an uppermost projection 107 projects. The heights may vary gradually. For illustration, projections 104-106 interposed between the lowermost projection 103 and the uppermost projections 107 may respectively project from the rear face of the lumbar support member 2 by heights which decrease monotonously. In the configuration of Fig. 25 and Fig. 26, the heights of the projections 103-107 decrease towards the end of the lumbar support member which, in the installed state, is the upper end.

As also shown in Fig. 25, when the lumbar support device is in a state in which the lumbar support member 2 is flat, the guide member 5 may be arranged at an angle relative to the plane of the lumbar support member 2. This allows a ventilator to be fit between the lumbar support member 2 and an adjusting member 17, without requiring the adjusting member 17 to have a U-shape.

Fig. 27 shows a lumbar support device in which the lumbar support member 2 has a plurality of projections 102. As best seen in the enlarged view of Fig. 28, a height of the projections 102 varies. A lowermost projection 113 may project from the rear face of the lumbar support member 2 by a height which is less than a height by which an uppermost projection 117 projects. The heights may vary gradually. For illustration, projections 114-116 interposed between the lowermost projection 113 and the uppermost projections 117 may respectively project from the rear face of the lumbar support member 2 by heights which increase monotonously. In the configuration of Fig. 27 and Fig. 28, the heights of the projections 113-117 increase towards the end of the lumbar support member which, in the installed state, is the upper end.
As also shown in Fig. 27, when the lumbar support device is in a state in which the lumbar support member 2 is flat, the guide member 5 may be arranged at an angle relative to the plane of the lumbar support member 2. This allows a ventilator to be fit between the lumbar support member 2 and an adjusting member 17, without requiring the adjusting member 17 to have a U-shape.
By using a configuration as explained with reference to Fig. 27 and Fig. 28, installation space for a ventilator may be created in an upper region of the lumbar support device. Alternative or additionally, so-called hangmat effects, i.e. variations in the degree of support offered by the lumbar support device at different heights, may be mitigated.
In the configurations as described with reference to Fig. 24 to Fig. 28, by providing the plurality of projections 101, 102 at the rear side of the lumbar support member, flexibility of the basket may be maintained. There may be gaps between adjacent projections which allows the basket to easily deflect.
Configurations of the lumbar support member 2 explained with reference to Fig. 24 to Fig. 28 may be used in lumbar support devices which have a ventilator, as explained with reference to Fig. 1 to Fig. 23. The configurations of the lumbar support member 2 explained with reference to Fig. 24 to Fig. 28 may also be used in lumbar support devices which do not have a ventilator.

For illustration, the rubber mount(s) used to mount the ventilator to the lumbar support member may be configured to snap the rubber mount(s) onto the lumbar support member for ease of installation. Additional spacer(s) may be used to further reduce noise. Also, the rubber mount(s) hold the ventilator such that the ventilator is spaced from all other rigid elements of the lumbar support device and vehicle seat under no-load and normal load conditions of the seat. Good noise reduction may be attained.
For illustration, while lumbar support devices operative to adjust both a height and a curvature of the lumbar support has been described, alternatively, the lumbar support device is not necessarily implemented as a four-way adjusting device. Also, the lumbar support device may comprise a moveable adjusting member and a drive mechanism, the lumbar support device being configured such that displacement of the adjusting member adjusts a height of the lumbar support along the longitudinal direction of the backrest. Also, the lumbar support device may comprise a moveable adjusting member and a drive mechanism, the lumbar support device being configured such that displacement of the adjusting member adjusts a curvature of the lumbar support. In either case, a shaft having a structured surface may be provided, which engages a transmission coupled between a motor and the shaft.
While a drive mechanism have been described which utilize Bowden cables or spindle mechanisms for converting a rotary output motion of a motor into a linear displacement of an adjusting member, other drive mechanisms may be used in order to effect a height adjustment of the lumbar support and/or a curvature adjustment of the lumbar support. For illustration, a drive mechanism that employs a shaft having a toothed surface may be utilized. Combinations of Bowden cables and spindle drives may be used. While a lumbar support device having a lumbar support member formed as a support basket has been shown in the drawings, the lumbar support member may have other suitable configurations. For illustration, the lumbar support member may be a support plate.
While lumbar support devices having an arching member have been described, the coupling between the adjusting member and the lumbar support member may also effected in other ways. For illustration, coupling members which are pivotable may be used. Alternatively or additionally, coupling members which are displaced along a pre-determined path when the adjusting member is displaced may be used.

While the invention has been described in the context of lumbar support adjustment and ventilation in the backrest of a vehicle seat, it is not limited to this particular field of application. It may also be advantageously employed to adjust lumbar supports in a wide variety of ventilated seats.

## Claims

1. A lumbar support device for a ventilated seat, comprising:
a lumbar support member (2),
a pair of guide members (4, 5), and
an adjusting member (14) coupled to the pair of guide members (4, 5), the adjusting member (14) being displaceable along the pair of guide members (4, 5) and configured such that the lumbar support member (2) is adjusted when the adjusting member (14) is displaced,
**characterized by**
a ventilator (20) configured to provide seat ventilation, and
a mount structure (21-25; 90) mounting the ventilator (20) to the lumbar support member (2), the mount structure (21-25; 90) being attached to at least one guide member (4, 5) of the pair of guide members (4, 5).

2. The lumbar support device of claim 1, further comprising:
at least one coupling member (11, 12) coupled to the adjusting member (14), the at least one coupling member (11, 12) being supported by at least one support section (15a, 15b; 63, 64; 83, 84) of the adjusting member (14),
wherein the at least one support section (15a, 15b; 63, 64; 83, 84) is configured to be moved past the ventilator (20) in a direction parallel to the pair of guide members (4, 5) when the adjusting member (14) is displaced along the pair of guide members (4, 5),
wherein the at least one support section (15a, 15b; 63, 64; 83, 84) supports an end of the at least one coupling member (11, 12).

3. The lumbar support device of claim 1 or claim 2, further comprising:
a stop (56, 57; 59) to limit movement of the ventilator (20) when a load (58) is applied onto the lumbar support member (2).

4. The lumbar support device of any one of the preceding claims, further comprising:
a connection member (27) to connect the ventilator (20) to a fluid channel (19) of the ventilated seat, the connection member (27) comprising a resilient bellows.

5. The lumbar support device of any one of the preceding claims,
wherein the mount structure (21-25; 90) is formed from a plastic material, in particular from rubber.

6. The lumbar support device of any one of the preceding claims,
wherein the ventilator (20) is a sucking ventilator (20).

7. The lumbar support device of any one of the preceding claims, further comprising:
a further adjusting member (17) which is displaceable along the pair of guide members (4, 5), and
a power drive mechanism (31; 71, 72) configured to displace at least one of the adjusting member (14) and the further adjusting member (17) along the pair of guide members (4, 5).

8. The lumbar support device of claim 7,
wherein the power drive mechanism comprises a motor and a spindle (72, 74) operatively coupled to the motor, the spindle (72, 74) extending parallel to the pair of guide members (4, 5).

9. The lumbar support device of claim 7 or claim 8,
wherein one of the adjusting member (14) and the further adjusting member (17) is displaceably supported on the other one of the adjusting member (14) and the further adjusting member (17).

10. The lumbar support device of any one of the preceding claims,
wherein the mount structure (90) comprises a support plate (91) to which the ventilator (20) is attached, the support plate (91) having an opening, and a pivot section (92) about which the support plate (91) is pivotable.

11. The lumbar support device of claim 10,
wherein the support plate (91) and the pivot section (92) are integrally formed from a plastic material.

12. The lumbar support device of any one of the preceding claims,
wherein the mount structure (90) comprises an overmolded section (94, 95) overmolded onto at least one guide member (4, 5) of the pair of guide members (4, 5).

13. The lumbar support device of any one of the preceding claims,
wherein a spindle (72) is attached to the mount structure (90),
wherein the spindle (72) applies a restoring force onto the mount structure (90) when a load acts onto the ventilator (20).

14. A ventilated seat, comprising:
a seat cushion (18), and
the lumbar support device of any one of the preceding claims.

15. The ventilated seat of claim 14,
wherein the ventilator (20) is connected to at least one fluid channel (19) formed in the seat cushion (18).

## Patentansprüche

1. Lendenstützvorrichtung für einen belüfteten Sitz, umfassend:
ein Lendenstützteil (2),
ein Paar von Führungsteilen (4, 5), und
ein mit dem Paar von Führungsteilen (4, 5) gekoppeltes Einstellteil (14),
wobei das Einstellteil (14) entlang des Paars von Führungsteilen (4, 5) verschiebbar und derart ausgestaltet ist, dass das Lendenstützteil (2) bei Verschiebung des Einstellteils (14) eingestellt wird,
**gekennzeichnet durch**
einen zur Bereitstellung von Sitzbelüftung ausgestalteten Ventilator (20), und
eine Befestigungsstruktur (21-25; 90), welche den Ventilator (20) an dem Lendenstützteil (2) befestigt, wobei die Befestigungsstruktur (21-25; 90) an mindestens einem Führungsteil (4, 5) des Paars von Führungsteilen (4, 5) angebracht ist.

2. Lendenstützvorrichtung nach Anspruch 1, weiter umfassend:
mindestens ein mit dem Einstellteil (14) gekoppeltes Kopplungsteil (11, 12), wobei das mindestens eine Kopplungsteil (11, 12) durch mindestens einen Stützabschnitt (15a, 15b; 63, 64; 83, 84) des Einstellteils (14) gestützt ist,
wobei der mindestens eine Stützabschnitt (15a, 15b; 63, 64; 83, 84) ausgestaltet ist, um in eine Richtung parallel zu dem Paar von Führungsteilen (4, 5) über den Ventilator (20) hinaus bewegt zu werden, wenn das Einstellteil (14) entlang des Paars von Führungsteilen (4, 5) verschoben wird,
wobei der mindestens eine Stützabschnitt (15a, 15b; 63, 64; 83, 84) ein Ende des mindestens einen Kopplungsteils (11, 12) stützt.

3. Lendenstützvorrichtung nach Anspruch 1 oder Anspruch 2, weiter umfassend:
einen Anschlag (56, 57; 59), um eine Bewegung des Ventilators (20) zu beschränken, wenn eine Last (58) auf das Lendenstützteil (2) angewendet wird.

4. Lendenstützvorrichtung nach einem der vorhergehenden Ansprüche, weiter umfassend:
ein Verbindungsteil (27), um den Ventilator (20) mit einem Fluidkanal (19) des belüfteten Sitzes zu verbinden, wobei das Verbindungsteil (27) einen nachgiebigen Balg umfasst.

5. Lendenstützvorrichtung nach einem der vorhergehenden Ansprüche,
wobei die Befestigungsstruktur (21-25; 90) aus einem Kunststoffmaterial, insbesondere aus Gummi, gebildet ist.

6. Lendenstützvorrichtung nach einem der vorhergehenden Ansprüche,
wobei der Ventilator (20) ein Saugventilator (20) ist.

7. Lendenstützvorrichtung nach einem der vorhergehenden Ansprüche, weiter umfassend:
ein weiteres Einstellteil (17), welches entlang des Paars von Führungsteilen (4, 5) verschiebbar ist, und
einen Elektroantriebsmechanismus (31; 71, 72), welcher ausgestaltet ist, um mindestens eines des Einstellteils (14) und des weiteren Einstellteils (17) entlang des Paars von Führungsteilen (4, 5) zu verschieben.

8. Lendenstützvorrichtung nach Anspruch 7,
wobei der Elektroantriebsmechanismus einen Motor und eine betriebswirksam mit dem Motor gekoppelte Spindel (72, 74) umfasst, wobei sich die Spindel (72, 74) parallel zu dem Paar von Führungsteilen (4, 5) erstreckt.

9. Lendenstützvorrichtung nach Anspruch 7 oder Anspruch 8,
wobei eines des Einstellteils (14) und des weiteren Einstellteils (17) verschiebbar auf dem anderen des Einstellteils (14) und des weiteren Einstellteils (17) gelagert ist.

10. Lendenstützvorrichtung nach einem der vorhergehenden Ansprüche,
wobei die Befestigungsstruktur (90) eine Stützplatte (91), an welcher der Ventilator (20) angebracht ist, und einen Schwenkabschnitt (92), um den die Stützplatte (91) schwenkbar ist, umfasst, wobei die Stützplatte (91) eine Öffnung aufweist.

11. Lendenstützvorrichtung nach Anspruch 10,
wobei die Stützplatte (91) und der Schwenkabschnitt (92) einstückig aus einem Kunststoffmaterial gebildet sind.

12. Lendenstützvorrichtung nach einem der vorhergehenden Ansprüche,
wobei die Befestigungsstruktur (90) einen umspritzten Abschnitt (94, 95) umfasst, der auf wenigstens einem Führungsteil (4, 5) des Paars von Führungsteilen (4, 5) umspritzt ist.

13. Lendenstützvorrichtung nach einem der vorhergehenden Ansprüche,
wobei eine Spindel (72) an der Befestigungsstruktur (90) angebracht ist,
wobei die Spindel (72) auf die Befestigungsstruktur (90) eine Rückstellkraft ausübt, wenn eine Last auf dem Ventilator (20) wirkt.

14. Belüfteter Sitz, umfassend:
ein Sitzkissen (18), und
die Lendenstützvorrichtung nach einem der vorhergehenden Ansprüche.

15. Belüfteter Sitz nach Anspruch 14,
wobei der Ventilator (20) mit mindestens einem in dem Sitzkissen (18) ausgebildeten Fluidkanal (19) verbunden ist.

## Revendications

1. Dispositif de support lombaire pour un siège ventilé, comprenant :
un élément de support lombaire (2),
une paire d'éléments de guidage (4, 5), et
un élément de réglage (14) couplé à la paire d'éléments de guidage (4, 5), l'élément de réglage (14) étant déplaçable le long de la paire d'éléments de guidage (4, 5) et configuré de sorte que l'élément de support lombaire (2) est réglé lorsque l'élément de réglage (14) est déplacé,
**caractérisé par**
un ventilateur (20) configuré pour fournir une ventilation de siège, et
une structure de montage (21-25 ; 90) montant le ventilateur (20) sur l'élément de support lombaire (2), la structure de montage (21-25 ; 90) étant fixée à au moins un élément de guidage (4, 5) de la paire d'éléments de guidage (4, 5).

2. Dispositif de support lombaire selon la revendication 1, comprenant en outre :
au moins un élément de couplage (11, 12) couplé à l'élément de réglage (14), le au moins un élément de couplage (11, 12) étant supporté par au moins une section de support (15a, 15b ; 63, 64 ; 83, 84) de l'élément de réglage (14),
dans lequel la au moins une section de support (15a, 15b ; 63, 64 ; 83, 84) est configurée pour être déplacée au-delà du ventilateur (20) dans une direction parallèle à la paire d'éléments de guidage (4, 5) lorsque l'élément de réglage (14) est déplacé le long de la paire d'éléments de guidage (4, 5),
dans lequel la au moins une section de support (15a, 15b ; 63, 64 ; 83, 84) supporte une extrémité du au moins un élément de couplage (11, 12).

3. Dispositif de support lombaire selon la revendication 1 ou la revendication 2, comprenant en outre :
une butée (56, 57 ; 59) pour limiter un déplacement du ventilateur (20) lorsqu'une charge (58) est appliquée sur l'élément de support lombaire (2).

4. Dispositif de support lombaire selon l'une quelconque des revendications précédentes, comprenant en outre :
un élément de connexion (27) pour connecter le ventilateur (20) à un canal de fluide (19) du siège ventilé, l'élément de connexion (27) comprenant un soufflet élastique.

5. Dispositif de support lombaire selon l'une quelconque des revendications précédentes,
dans lequel la structure de montage (21-25 ; 90) est formée à partir d'une matière plastique, en particulier de caoutchouc.

6. Dispositif de support lombaire selon l'une quelconque des revendications précédentes,
dans lequel le ventilateur (20) est un ventilateur d'aspiration (20).

7. Dispositif de support lombaire selon l'une quelconque des revendications précédentes, comprenant en outre :
un élément de réglage supplémentaire (17) déplaçable le long de la paire d'éléments de guidage (4, 5), et
un mécanisme d'entraînement mécanique (31 ; 71, 72) configuré pour déplacer au moins l'un de l'élément de réglage (14) et de l'élément de réglage supplémentaire (17) le long de la paire d'éléments de guidage (4, 5).

8. Dispositif de support lombaire selon la revendication 7,
dans lequel le mécanisme d'entraînement mécanique comprend un moteur et une broche (72, 74) couplée fonctionnellement au moteur, la broche (72, 74) s'étendant parallèlement à la paire d'éléments de guidage (4, 5).

9. Dispositif de support lombaire selon la revendication 7 ou la revendication 8,
dans lequel un parmi l'élément de réglage (14) et l'élément de réglage supplémentaire (17) est supporté de façon déplaçable sur l'autre parmi l'élément de réglage (14) et de l'élément de réglage supplémentaire (17).

10. Dispositif de support lombaire selon l'une quelconque des revendications précédentes,
dans lequel la structure de montage (90) comprend une plaque de support (91) à laquelle le ventilateur (20) est fixé, la plaque de support (91) présentant une ouverture, et une section de pivotement (92) autour de laquelle la plaque de support (91) peut pivoter.

11. Dispositif de support lombaire selon la revendication 10,
dans lequel la plaque de support (91) et la section de pivotement (92) sont formées d'un seul tenant à partir d'une matière plastique.

12. Dispositif de support lombaire selon l'une quelconque des revendications précédentes,
dans lequel la structure de montage (90) comprend une section surmoulée (94, 95) surmoulée sur au moins un élément de guidage (4, 5) de la paire d'éléments de guidage (4, 5).

13. Dispositif de support lombaire selon l'une quelconque des revendications précédentes,
dans lequel une broche (72) est fixée à la structure de montage (90),
dans lequel la broche (72) applique une force de rappel sur la structure de montage (90) lorsqu'une charge agit sur le ventilateur (20).

14. Siège ventilé comprenant :
un coussin de siège (18), et
le dispositif de support lombaire selon l'une quelconque des revendications précédentes.

15. Siège ventilé selon la revendication 14,
dans lequel le ventilateur (20) est relié à au moins un canal de fluide (19) formé dans le coussin de siège (18).
